## Europäisches Patentamt

## European Patent Office

## Office européen des brevets

(11) Numéro de publication: **0 256 928**
**B1**

(12) **FASCICULE DE BREVET EUROPEEN**

(45) Date de publication du fascicule du brevet:
14.11.90

(51) Int. Cl.⁵: **G01L 9/04**

(21) Numéro de dépôt: 87401806.2

(22) Date de dépôt: 03.08.87

(54) **Capteur de pression.**

(30) Priorité: 04.08.86 FR 8611272

(43) Date de publication de la demande:
24.02.88 Bulletin 88/8

(45) Mention de la délivrance du brevet:
14.11.90 Bulletin 90/46

(84) Etats contractants désignés:
**BE DE GB IT**

(56) Documents cités:
**WO-A-83/00225**
**US-A- 2 405 199**
**US-A- 3 089 341**
**US-A- 3 474 681**

(73) Titulaire: **COMMISSARIAT A L'ENERGIE ATOMIQUE,
31/33, rue de la Fédération, F-75015 Paris(FR)**

(72) Inventeur: **Voituriez, Bernard, 4, Avenue Albert 1er de
Belgique, F-38000 Grenoble(FR)**

(74) Mandataire: **Mongrédien, André et al, c/o
BREVATOME 25, rue de Ponthieu, F-75008 Paris(FR)**

## Description

La présente invention concerne un capteur de pression de petites dimensions prévu pour travailler dans des fourchettes très étendues de température et de pression, ainsi que dans des ambiances sévères : milieux radioactifs et corrosifs, gradients de température, présence de champs électriques et magnétiques. Ce capteur travaille à l'aide de jauges d'extensométrie.

De nombreux autres types de capteurs de pression munis de jauges d'extensométrie sont déjà utilisés. Ils consistent traduire une pression en déformation d'une structure sur laquelle sont fixées un nombre variable de jauges. Les paramètres qui peuvent justifier un choix sont la sensibilité et la linéarité de la déformation mesurée par les jauges vis-à-vis de la pression, la valeur des pressions elles-mêmes, l'encombrement du capteur et sa fréquence propre si on travaille dans un milieu sujet aux vibrations mécaniques, et l'agressivité du milieu extérieur qui est une des raisons pour lesquelles certains capteurs emploient un moyen d'isoler la surface sur laquelle sont collées les jauges de ce milieu extérieur.

Selon une conception de capteur ressemblant à celle de l'invention, les jauges sont collées sur la branche centrale d'une pièce en U dont la pression à mesurer écarte ou resserre les branches extrêmes : le fléchissement de la branche centrale caractérise donc la pression à mesurer. Le capteur comprend donc en outre une enceinte déformable, telle qu'un soufflet, dans laquelle pénètre la pression. Les extrémités de l'enceinte déforment les branches du U à l'aide de tiges de liaison. Le soufflet travaille ainsi en traction, ce qui n'est pas avantageux ; de plus, l'insertion du soufflet dans l'espace central du U nécessite que celui-ci ait une taille relativement importante, beaucoup plus que la taille des jauges ne l'exigerait.

La présente invention a pour objet un capteur de pression peu volumineux qui concilie une bonne précision avec une grande résistance au milieu extérieur dans la mesure où la zone sur laquelle sont collées les jauges est complètement isolée de celui-ci ; en outre, le capteur peut fonctionner dans des fourchettes de pression très étendues.

Plus précisément ce capteur comprend :

- une lame en matériau élastique de section rectangulaire dont la flexion dépend de la pression à mesurer, supportant deux jauges d'extensométrie actives et se prolongeant en ses extrémités par deux parties cylindriques de telle sorte que la lame soit excentrée par rapport à ces deux parties cylindriques dont l'une est utilisée pour assurer le maintien de la lame dans le capteur et dont l'autre subit la pression mesurer ;
- une enveloppe isolant la lame du milieu extérieur et fixée aux deux parties massives, délimitant un espace étanche autour de la lame et d'une portion des parties massives ; l'enveloppe est de rigidité négligeable lors de la flexion de la lame, apte cependant à résister aux pressions du milieu extérieur sur sa surface extérieure.

Selon une caractéristique importante de l'invention, la lame comporte deux jauges d'extensométrie disposées sur les deux faces de la lame, qui font partie d'un montage électrique dans lequel elles compensent les effets thermiques et fournissent le signal à mesurer. Un tel montage de deux jauges est nécessaire et suffisant pour optimiser la sensibilité et compenser au mieux les effets thermiques.

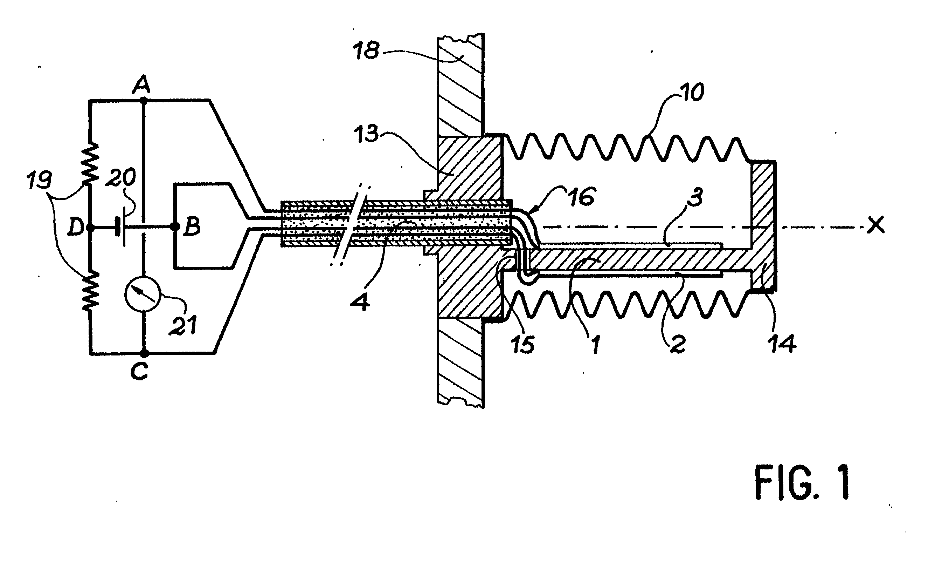

Deux modes possibles de réalisation de l'invention sont illustrés plus en détail à l'aide des figures 1 et 2 dont la description suit. Ces modes de réalisation ne sont toutefois pas les seuls envisageables et ne sont pas donnés à titre limitatif.

La figure 1 représente donc une coupe du capteur dont la plupart des pièces sont à symétrie de révolution autour de l'axe XX.

Le capteur comprend une lame 1 en matériau élastique, comme par exemple l'acier inoxydable, prolongée à ses extrémités par deux cylindres 13 et 14.

La lame et les deux cylindres sont avantageusement obtenus par usinage approprié d'un tronçon de barre et forment ainsi un sul bloc. De toute manière, la lame 1 doit être excentrée de l'axe des deux cylindres tout en lui étant parallèle. L'importance de l'excentrement dépend des pressions que l'on souhaite mesurer : un fort excentrement est plus précis pour de faibles pressions, un faible excentrement permet au capteur de résister à de hautes pressions. La pression à mesurer s'exerce sur la portion de la partie cylindrique 14 à l'extérieur du soufflet 10 ; la résultante des efforts qu'elle engendre est donc non null et comprime la lame 1 tout en la fléchissant à cause de l'excentrement du point d'application de cette résultante par rapport à la lame 1 ; la symétrie de révolution empêche la création d'un effort tranchant sur cette lame, et on est donc en présence d'une flexion pure jointe à de la compression. Les déformations subies par la lame 1 sont donc homogènes sur toute sa longueur ; ses dimensions peuvent donc être choisies du même ordre de grandeur que celles des jauges d'extensométrie 2 et 3 qui sont avantageusement au nombre de deux et disposées sur les deux faces opposées de la lame 1 de façon à mesurer des déformations de la lame 1, (en traction ou compression) de même direction. L'encombrement est donc très réduit.

Le second cylindre 13 assure l'encastrement de la lame 1 dans le capteur. Il est percé longitudinalement pour recevoir un capillaire en alumine 4 muni de quatre canaux pour les deux fils 16 de chaque jauge 2 ou 3. Un perçage supplémentaire 15 peut être opéré dans la lame 1 pour faire passer commodément les deux fils 16 de la jauge 2 opposée au capillaire 4 à l'intérieur de celui-ci.

Une caractéristique essentielle de l'invention est la présence d'un soufflet 10 de forme généralement cylindrique et fixé sur les cylindres 14 et 13 de manière à confiner la lame 1 dans une enceinte étanche et dans laquelle le vide est effectué au montage du capteur. On pourrait aussi y introduire du gaz inerte pour éviter la corrosion. La lame 1 est donc protégée du fluide sous pression, et surtout la face du cylindre 14 qui comprend l'intersection avec la lame 1 n'est pas soumise à la pression du fluide extérieur, ce qui entraîne une poussée de ce cylindre 14 vers le cylindre 13, qui comprime ainsi la lame 1 tout en la fléchissant à cause de son excentrement. Le soufflet 10 possède une résistance négligeable vis-à-vis de ces efforts, alors qu'il résiste très bien aux efforts axisymétriques de compression exercés par le fluide autour de lui.

Les valeurs des déformations des jauges sont transmises, par l'intermédiaire des fils 16, à un montage en pont de Wheatstone qui permet de soustraire ces valeurs de façon à supprimer la partie correspondant à la compression pure et aux effets thermiques. La valeur de la flexion est donc déterminée commodément avec une grande précision.

On dispose les jauges 2 et 3 entre les points A,B et B,C d'un circuit électrique ; on dispose encore deux résistances 19, égales aux résistances des jauges 2 et 3 non sollicitées, entre C,D et D,A, une f.e.m. 20 entre B et D, et un voltmètre 21 entre A et C qui mesure donc la différence de variation de résistance des jauges 2 et 3 et caractérise la flexion pure de la lame 1.

La figure 2 représente un autre mode de réalisation du capteur selon l'invention. On retrouve la lame 1, les jauges 2 et 3, les cylindres 13 et 14, le capillaire 4 et le soufflet 10 comme précédemment. Le fonctionnement du capteur et l'exploitation électrique des mesures sont exactement les mêmes que précédemment. Ici le capteur comprend en outre une enceinte externe de protection 11 constituée de préférence d'un matériau réfractaire tel que la céramique. Cette enceinte 11 est percée en 12 de manière à laisser pénétrer le fluide dont on veut mesurer la pression. Un perçage long et étroit permet de mieux isoler le capteur des gradients de température dont le fluide peut être le siège.

Les fils 16 des jauges 2 et 3 débouchent dans l'alésage d'une pièce de raccordement 5, qui est fermé à une extrémité par 1 cylindre 13 et à l'autre extrémité par un bouchon 6 qui est toutefois percé de façon à laisser passer un câble électrique 7 sur lequel on soude les fils 16.

Enfin, le soufflet 10 est lié aux cylindres 14 et 13 par l'intermédiaire de deux embouts 8 et 9.

Ces diverses modifications conduisent à un capteur plus complexe mais de conception plus robuste que celui de la figure 1 ; il sera donc à employer pour les milieux plus agressifs.

D'une façon générale, les liaisons entre pièces sont assurées par soudage, brasage, collage ou tout procédé analogue compatible avec les matériaux concernés et le fluide ambiant.

La description qui précède permet donc de dégager les principaux avantages de ce capteur : simplicité du phénomène utilisé pour caractériser la flexion, petite taille en l'absence de volume mort et robustesse qui permettent de garantir la linéarité (erreur d'hystérésis inférieure à 0,2%) et la précision de son comportement dans des milieux agressifs et des conditions difficiles : une réalisation effective de l'invention est prévue pour travailler dans une gamme de pressions comprise entre le quasi-vide et plusieurs milliers de bars (des surcharges de 50% peuvent être admises sans détériorer le capteur) et à des températures comprises entre -200°C et 900°C ses petites dimensions, 6 à 15 mm de diamètre et 10 à 60 mm de longueur, garantissent une première fréquence propre élevée : supérieure ou égale à 10 kilohertz, et une rapidité de réponse telle que 80% de l'étendue de mesure prévue peuvent être parcourus en moins d'une milliseconde, ce qui rend le capteur précieux pour caractériser les forts gradients de pression.

Des jauges et une électronique simples permettent de caractériser l'étendue de mesure sur une différence de potentiel de 10 volts.

Le capteur objet de l'invention présente donc de nombreux avantages tout en conservant une simplicité qui garantit la modicité de son prix de revient.

## Revendications

1. Capteur de pression à jauges d'extensométrie (2, 3) caractérisé en ce qu'il comprend :
une lame (1) en matériau élastique de section rectangulaire dont la flexion dépend de la pression à mesurer, supportant deux jauges (2, 3) d'extensométrie actives et se prolongeant en ses extrémités par deux parties cylindriques (13, 14) de telle sorte que la lame (1) soit excentrée par rapport à ces deux parties cylindriques dont l'une (13) est utilisée pour assurer le maintien de la lame dans le capteur et dont l'autre (14) subit la pression à mesurer ;
- une enveloppe (10) fixée aux deux parties massives (14, 13), délimitant un espace étanche autour de la lame (1) et d'une portion de la partie massive (14), l'enveloppe étant pourvue d'une grande rigidité vis-à-vis de la pression extérieure, mais d'une rigidité négligeable vis-à-vis de la flexion de la lame (1).

2. Capteur de pression suivant la revendication 1, caractérisé en ce qu'il comprend une enceinte de protection (11), disposée autour de la partie massive (14) et de l'enveloppe (10), presque fermée et en matériau réfractaire.

3. Capteur de pression suivant l'une quelconque des revendications 1 ou 2, caractérisé en ce que l'enveloppe (10) isolant la lame est constituée d'un soufflet à contour généralement cylindrique.

4. Capteur de pression suivant l'une quelconque des revendications 1 à 3, caractérisé en ce qu'il comprend deux jauges (2, 3) disposées sur les deux faces de la lame (1) et orientées de façon à mesurer des déformations de même direction.

5. Capteur de pression suivant l'une quelconque des revendications 1 à 4, caractérisé en ce que les fils (16) de connexion des jauges (2, 3) passent par un capillaire (4) disposé dans un alésage de la partie massive (13) et aboutissent dans une chambre alésée dans une pièce de raccordement (5) où ils sont reliés aux fils d'un câble électrique (7).

## Patentansprüche

1. Druckwandler mit Dehnungsmessstreifen (2, 3) dadurch gekennzeichnet, dass er aufweist:
- eine Lamelle (1) aus elastischem Material mit einem rechtwinkligen Querschnitt, deren Verbiegung von dem zu messenden Druck abhängt und die zwei aktive Dehnungsmessstreifen (2, 3) trägt und sich an ihren Enden in zwei zylindrische Teile (13, 14) so verlängert, dass die Lamelle (1) bezüglich dieser beiden zylindrischen Teile, von denen das eine (13) zum Sicherstellen des Haltens der Lamelle in dem Wandler benutzt wird und wovon das andere (14) den zu messenden Druck erfährt, exzentriert ist;

- eine an zwei massive Teile (14, 13) befestigte Hülle (10), die einen dichten Raum um die Lamelle (1) und einen Teil des massiven Teils (14) bildet, wobei die Hülle mit einer grossen Steifheit gegenüber dem Aussendruck, aber einer vernachlässigbaren Steifheit gegenüber der Verbiegung der Lamelle (1) versehen ist.

2. Druckwandler nach Anspruch 1, dadurch gekennzeichnet, dass er eine Schutzhülle (11) aufweist, die um den massiven Teil (14) und die Hülle (10) angeordnet ist, die fast geschlossen ist und die aus hochschmelzendem Material besteht.

3. Druckwandler nach einem der Ansprüche 1 oder 2, dadurch gekennzeichnet, dass die Hülle (10), die die Lamelle isoliert, aus einem Balg mit im allgemeinen zylindrischem Umfang besteht.

4. Druckwandler nach einem der Ansprüche 1 bis 3, dadurch gekennzeichnet, dass er zwei Messstreifen (2, 3) aufweist, die auf den beiden Seiten der Lamelle (1) angeordnet sind und so orientiert sind, dass sie Deformationen der gleichen Richtung messen.

5. Druckwandler nach einem der Ansprüche 1 bis 4, dadurch gekennzeichnet, dass die Verbindungsdrähte (16) der Messstreifen (2, 3) durch eine in einer Bohrung des massiven Teils (13) angeordnete Kapillare (4) gehen und in einer in einem Verbindungsstück (5) gebohrten Kammer enden, wo sie mit den Drähten eines elektrischen Kabels (7) verbunden sind.

**Claims**

1. Pressure transducer with extensometric gauges (2, 3) characterized in that it comprises:

an elastic material strip (1) having a rectangular section, whereof the bending or deflection is dependend on the pressure to be measured, which supports two active extensometric gauges (2, 3) or extensometers and is extended at its ends by two cylindrical parts (13, 14) in such a way that the strip (1) is offcentred or offset with respect to said two cylindrical parts, whereof one (13) is used for ensuring the maintenance of the strip in the transducer and whereof the other (14) is subject to the pressure to be measured;

an envelope (10) insulating the strip from the external medium and fixed to the two solid parts (14, 13) defining a tight space round the strip (1) and a portion of said solid part (14), the envelope having a negligible rigidity during the bending of the strip (1), but is able to withstand the pressures of the external medium on its outer surface.

2. Pressure transducer according to claim 1, characterized in that it comprises a protective enclosure (11) arranged around the solid part (14) and the envelope (10), which is almost closed and made from a refractory material.

3. Pressure transducer according to either of the claims 1 and 2, characterized in that the strip-insulating envelope (10) is constituted by a bellows having a generally cylindrical contour.

4. Pressure transducer according to any one of the claims 1 to 3, characterized in that it comprises two gauges (2, 3) located on the two faces of strip (1) and oriented so as to measure deformations in the same direction.

5. Pressure transducer according to any one of the claims 1 to 4, characterized in that the connecting wires (16) of gauges (2, 3) pass through a capillary (4) located in a bore of solid part (13) and load into a bored chamber formed in a connecting piece (5), where they are connected to the wires of an electric cable (7).

FIG. 1